# EUROPÄISCHE PATENTANMELDUNG

(11) **EP 3 082 084 A1**
(43) Veröffentlichungstag der Anmeldung: **19.10.2016**
(21) Anmeldenummer: 15194268.7
(22) Anmeldetag: 12.11.2015
(51) Int. Cl.: G06Q 10/10

(54) **VERFAHREN UND VORRICHTUNG ZUM VERWALTEN VON TERMINEN**

(30) Priorität: 17.04.2015 DE 102015206951
(71) Anmelder: Volkswagen Aktiengesellschaft, 38440 Wolfsburg (DE)
(72) Erfinder: Schriever, David, 38176 Wendeburg (DE)

(57) **Zusammenfassung**

Die Erfindung betrifft ein Verfahren zum Verwalten von Terminen (24), bei dem zeitlich aufeinanderfolgende erste Termine (24) geordnet in einem horizontalen Band auf einem Display (1) auszugeben werden. Es ist dadurch gekennzeichnet, dass eine Terminanfrage empfangen wird, die einen neuen Termin (27) in dem Intervall der aufeinanderfolgenden ersten Termine (24) enthält. Ferner wird eine Bestätigung der Terminanfrage empfangen. Darauf werden das horizontale Band und der neue Termin (27) derart relativ zueinander verschoben, dass der neue Termin (27) an dem Zeitpunkt des horizontalen Bandes erscheint, an dem der neue Termin (27) eingefügt werden soll Die ersten Termine (24) vor und hinter diesem Zeitpunkt werden auseinandergeschoben und der neue Termin (27) wird zwischen den unmittelbar vor und hinter diesem Zeitpunkt befindlichen ersten Terminen (24) in das horizontale Band eingefügt. Schließlich wird das horizontale Band derart verschoben, dass der nächste Termin (24a) auf dem Display erscheint. Die Erfindung betrifft ferner eine Vorrichtung zum Verwalten von Terminen und ein Fahrzeug mit einer solchen Vorrichtung.

## Beschreibung

Die Erfindung betrifft ein Verfahren zum Verwalten von Terminen, bei dem zeitlich aufeinanderfolgende erste Termine geordnet in einem horizontalen Band auf einem Display ausgegeben werden. Sie betrifft ferner eine Vorrichtung zum Verwalten von Terminen mit einem Display, einer Bedienschnittstelle und einer Steuerung, die eingerichtet ist, zeitlich aufeinanderfolgende erste Termine geordnet in einem horizontalen Band auf dem Display auszugeben. Die Erfindung betrifft ferner ein Fahrzeug.

Elektronische Geräte finden wachsende Verbreitung zur Planung von Terminen und Betriebsabläufen, nicht zuletzt wegen der zunehmenden Nutzung mobiler Rechner und Smartphones sowie wegen der verbesserten Versorgung weiter Landstriche mit mobilem Internetzugang. Ferner wurden in der jüngeren Vergangenheit die Möglichkeiten der Nutzung elektronischer Anwendungen zunehmend auch auf mobile Einheiten, wie etwa Fahrzeuge ausgeweitet. Hier kann eine weitere Integration in umfassendere Systeme erfolgen, beispielsweise indem ein Navigationssystem auf Daten eines elektronischen Kalenders zugreift und den Nutzer zu den Orten der jeweiligen Termine führt.

Die Verwaltung von Kalenderdaten stellt allerdings immer noch eine komplexe Aufgabe dar: Durch Ändern oder Hinzufügen von Terminen kann es zu Wechselwirkungen mit bereits bestehenden Kalendereinträgen kommen, die dem Nutzer einfach erfassbar dargestellt werden müssen, damit dieser gegebenenfalls reagieren und die Kalenderdaten anpassen kann. Zudem erfordert insbesondere der Einsatz eines Kalenders in einer mobilen Nutzungsumgebung eine besonders schnell erfassbare Darstellung, da die Aufmerksamkeit des Nutzers nicht zu sehr gebunden werden soll.

Bei dem in der DE 11 2010 002 210 T5 beschriebenen Verfahren wird eine Kalenderanwendung auf einer nomadischen Einrichtung ausgeführt, wobei Eingaben von einem Fahrzeugcomputersystem erfasst werden können. Dabei können Termine beispielsweise hinzugefügt, entfernt oder modifiziert werden.

Das in der WO 2012/102879 A1 beschriebene Verfahren erlaubt die Kommunikation eines mobilen Geräts mit einer Einrichtung eines Fahrzeugs. Dadurch kann eine netzwerkbasierte Kalenderanwendung betrieben werden, bei der über ein Netzwerk auf verschiedene Komponenten des Kalenders zugegriffen wird.

Es ist die Aufgabe der vorliegenden Erfindung, insbesondere für Kraftfahrzeuge und Mobilgeräte ein Verfahren und ein System zum verbesserten Verwalten von Terminen und eine verbesserte Einbindung neuer Termine in bereits bestehende Termine bereitzustellen, bei denen der Nutzer besonders einfach und schnell Änderungen seiner Termine erfassen kann.

Diese Aufgabe wird erfindungsgemäß durch ein Verfahren mit den Merkmalen des Anspruchs 1 und eine Vorrichtung mit den Merkmalen des Anspruchs 12 gelöst. Vorteilhafte Weiterbildungen und Ausgestaltungen ergeben sich aus den abhängigen Ansprüchen.

Das erfindungsgemäße Verfahren der oben genannten Art ist dadurch gekennzeichnet, dass eine Terminanfrage empfangen wird, die einen neuen Termin in dem Intervall der aufeinanderfolgenden ersten Termine enthält und anschließend eine Bestätigung der Terminanfrage empfangen wird. Ferner werden das horizontale Band und der neue Termin derart relativ zueinander verschoben, dass der neue Termin an dem Zeitpunkt des horizontalen Bandes erscheint, an dem der neue Termin eingefügt werden soll. Die ersten Termine werden vor und hinter diesem Zeitpunkt auseinandergeschoben und der neue Termin wird zwischen den unmittelbar vor und hinter diesem Zeitpunkt befindlichen ersten Termin in das horizontale Band eingefügt wird. Zuletzt wird das horizontale Band derart verschoben, dass der nächste Termin auf dem Display erscheint.

Das Verfahren wird insbesondere in einem Fahrzeug ausgeführt.

Ein "Termin" im Sinne der Erfindung umfasst Informationen zu zumindest einem Zeitpunkt oder Zeitraum sowie zu einem Ereignis. Die Erfindung geht von an sich bekannten Terminverwaltungsprogrammen aus, bei denen zunächst erste Termine, die beispielsweise in einem elektronischen Terminkalender gespeichert sind, erfasst und graphisch ausgegeben werden. Dies erfolgt durch die Anzeige von Graphikdaten auf einem Display. Das Display kann Bestandteil eines Kombiinstrumentes eines Fahrzeugs sein und ist freiprogrammierbar ausgebildet. Das Display kann alternativ oder ergänzend auch Bestandteil eines Infotainmentsystems oder eines Mobilgerätes sein.

Die angezeigten Graphikdaten umfassen die Termine als graphische Objekte, die in verschiedenen tabellarischen Darstellungen angeordnet sind, zum Beispiel in einer Tagesansicht, Wochenansicht oder Monatsansicht. Erfindungsgemäß erfolgt die Darstellung in einem horizontalen Band. Insbesondere sind die Termine dabei chronologisch geordnet, etwa indem von links nach rechts nacheinander folgende Termine dargestellt werden.

Vorzugsweise betrifft die vorliegende Erfindung Termine, die an einem Tag, in einer Nacht oder innerhalb eines anderen, nicht durch eine größere Pause unterbrochenen Zeitraums wahrgenommen werden sollen. Sind zu viele Termine vorhanden, um sie gleichzeitig übersichtlich in dem horizontalen Band auf dem Display darstellen zu können, wird nur ein zusammenhängender Teil der Termine dargestellt. Die Darstellung wird mit fortschreitender Zeit kontinuierlich, periodisch oder auf dergleichen Weise aktualisiert. Noch nicht dargestellte Termine werden in einem Speicher vorgehalten. Bereits erledigte Termine können gelöscht oder für andere Zwecke gespeichert werden.

Terminverwaltungsprogramme erlauben ferner, neue Termine einzufügen. Insbesondere liegt dazu eine Terminanfrage vor, das heißt, ein Termin ist von der Zustimmung zumindest zweier Partner abhängig. Insbesondere kann das Terminverwaltungsprogramm Termindaten und eine Zusage oder Absage dazu erfassen. Im Falle einer Zusage kann der Termin in den Terminkalender aufgenommen werden. Beispielsweise kann eine Terminanfrage per E-Mail empfangen werden. Bestätigt der Empfänger den neuen Termin, wird er in der Darstellung der Termine an der zeitlich richtigen Stelle eingefügt. Dabei kann entweder der Nutzer eine Terminanfrage erhalten und darauf reagieren oder er kann selbst eine Terminanfrage an andere senden und wartet dann auf eine Zusage oder eine Absage.

Erfindungsgemäß erfolgt das Einfügen des neuen Termins so, dass zunächst eine Relativverschiebung des dargestellten Bandes mit den ersten Terminen und dem neuen Termin durchgeführt wird. Insbesondere wird dabei das Band so in horizontaler Richtung verschoben, dass in der Reihe der dargestellten Termine die Stelle sichtbar wird, bei welcher der Termin eingefügt werden soll. Beispielsweise werden nun die Termine angezeigt, die direkt vor und direkt nach dem zeitlichen Beginn des neuen Termins angeordnet sind. In einem nächsten Schritt werden die ersten Termine so auseinandergeschoben, dass eine Lücke in der geordneten Folge der ersten Termine so entsteht, dass der neue Termin passend eingefügt werden kann. Insbesondere wird dabei eine Lücke bestimmter Ausdehnung gebildet. Der neue Termin wird nun eingefügt und es erfolgt eine Verschiebung des Bandes mit den Terminen so, dass der aktuelle Termin dargestellt wird.

Bei einer Ausbildung des erfindungsgemäßen Verfahrens umfassen die Termine Daten zu einem Anfangszeitpunkt, einem Endzeitpunkt, einer Dauer, einem Namen und/oder einem geographischen Ort. Termine können ferner etwa Informationen zu einem Zeitraum, einem Wiederholungsintervall, einem Ort, den beteiligten Personen oder Notizen und weiterführende Informationen umfassen. Dadurch kann vorteilhafterweise ein Terminplan als eine Folge von Terminen mit allen relevanten Informationen dargestellt werden.

Bei einer Weiterbildung werden die Termine als Terminobjekte dargestellt, wobei die Terminobjekte zeitlich aufeinanderfolgend in dem horizontalen Band geordnet sind. Die Termine können so in vorteilhafter Weise graphisch dargestellt werden.

Insbesondere können die Terminobjekte alphanumerische Angaben über den Termin umfassen. Der Nutzer kann dadurch vorteilhafterweise Informationen einfach und schnell erfassen, etwa die relevanten Zeiten, Orte und Namen.

Bei einer Ausbildung der Erfindung wird anhand der Terminanfrage ein graphisches Anfrageobjekt erzeugt und angezeigt. Dies erlaubt vorteilhafterweise eine leicht erfassbare, graphische Darstellung der Terminanfrage für den Nutzer. Beispielsweise kann anhand der Terminanfrage ein Popup-Fenster erzeugt werden, das die Darstellung der ersten Termine teilweise überdeckt und dem Nutzer so das Erscheinen eine besonderen Zusatzinformation signalisiert.

Bei einer Weiterbildung der Erfindung umfasst die Terminanfrage einen Namen einer Person und das Anfrageobjekt umfasst eine bildhafte Darstellung, die der Person zugeordnet ist. Der Nutzer kann so vorteilhafterweise die für den Termin relevante Person schnell identifizieren. Beispielsweise kann das Terminverwaltungsprogramm die Daten der bildhaften Darstellung bereitstellen, etwa ein Foto, ein Firmenlogo oder ein Profilbild, etwa aus einem sozialen Netzwerk, bei dem die Person registriert ist.

Bei einer weiteren Ausbildung wird ferner anhand der Terminanfrage eine akustisch erfassbare Ausgabe erzeugt und ausgegeben. Der Nutzer wird dadurch vorteilhafterweise besonders schnell auf die Terminanfrage hingewiesen und kann schnell darauf reagieren. Die akustische Ausgabe kann beispielsweise ein Tonsignal umfassen, durch das der Nutzer auf das Erscheinen einer Terminanfrage auf dem Display hingewiesen wird. Ferner kann die akustisch erfassbare Ausgabe auch Teil einer Sprachsteuerung sein, bei der beispielsweise die Terminanfrage als Sprachnachricht ausgegeben wird.

Bei einer Weiterbildung umfasst das horizontale Band ein graphisches Zeitachsenobjekt mit einer horizontalen Längsausdehnung und sind die Termine entlang der Längsausdehnung des Zeitachsenobjekts chronologisch angeordnet. Die Darstellung der Termine gibt dem Nutzer so in vorteilhafter Weise schnell erfassbar eine Orientierung über die mit den Terminen verknüpften zeitlichen Abläufe.

Bei einer Ausbildung der Erfindung umfasst das graphische Zeitachsenobjekt Markierungen, die den Terminen zugeordnete Zeitdaten markieren. Der Nutzer kann dadurch vorteilhafterweise die zeitliche Abfolge der Termine leicht erfassen. Beispielsweise kann das Zeitachsenobjekt eine Linie sein, die parallel zur Längsrichtung des Bandes mit den Terminen verläuft und Markierungen aufweist, die Uhrzeiten und/oder Zeitabschnitten entsprechen. Die Termine können so angeordnet sein, dass das Zeitachsenobjekt als Skala fungiert und der Nutzer Uhrzeiten ablesen kann, ohne auf alphanumerische Angaben angewiesen zu sein.

Bei einer Ausbildung des erfindungsgemäßen Verfahrens wird die Nutzerbestätigung durch einen Touchscreen, einen Tastschalter, einen Gestensensor oder einen akustischen Sensor erfasst. Dem Nutzer können so in vorteilhafter Weise verschiedene Bedienmöglichkeiten gegeben werden.

Bei einer Ausbildung werden die ersten Termine und/oder die Terminanfrage von einem externen Nutzergerät erfasst. Insbesondere kann dazu eine Verbindung zu dem externen Nutzergerät hergestellt werden, beispielsweise mittels einer trennbaren datentechnischen Verbindung, etwa per Funk. Dies erlaubt vorteilhafterweise eine Integration externer Nutzergeräte, beispielsweise Mobiltelefone in einem Fahrzeug, und die Nutzung der Erweiterungsmöglichkeiten, die solche externen Geräte bieten.

Insbesondere können auch Daten an das externe Nutzergerät übertragen werden, sodass die Integration in ein Terminverwaltungssystem vervollständigt wird.

Die erfindungsgemäße Vorrichtung der oben genannten Art ist gekennzeichnet durch einen Empfänger und dadurch, dass die Steuerung eingerichtet ist, über den Empfänger eine Terminanfrage zu empfangen, die einen neuen Termin in dem Intervall der aufeinanderfolgenden ersten Termine enthält. Sie ist ferner eingerichtet, die Terminanfrage auf dem Display auszugeben und über die Bedienschnittstelle eine Bestätigung der Terminanfrage zu empfangen. Dabei ist sie eingerichtet, das horizontale Band und den neuen Termin derart relativ zueinander zu verschieben, dass der neue Termin an dem Zeitpunkt des horizontalen Bandes erscheint, an dem der neue Termin eingefügt werden soll, und die ersten Termine vor und hinter diesem Zeitpunkt auseinanderzuschieben. Sie ist schließlich dazu eingerichtet, den neuen Termin zwischen den unmittelbar vor und hinter diesem Zeitpunkt befindlichen ersten Termin in das horizontale Band einzufügen und das horizontale Band derart zu verschieben, dass der nächste Termin auf dem Display erscheint.

Die erfindungsgemäße Vorrichtung ist insbesondere ausgebildet, das vorstehend beschriebene erfindungsgemäße Verfahren zu implementieren. Die Vorrichtung weist somit dieselben Vorteile auf wie das erfindungsgemäße Verfahren.

Bei einer Ausbildung der erfindungsgemäßen Vorrichtung sind die ersten Termine und/oder die Terminanfrage durch den Empfänger von einem externen Nutzergerät erfassbar. Die Vorrichtung kann damit vorteilhafterweise modular betrieben werden und Daten von anderen Nutzergeräten berücksichtigen.

Bei einer Weiterbildung umfasst die Bedienschnittstelle einen Touchscreen, einen Tastschalter, einen Gestensensor und/oder einen akustischen Sensor. Der Nutzer kann dadurch vorteilhaferweise Eingaben auf besonders bequeme und schnell Art vornehmen. Beispielsweise kann die akustische Eingabe in solchen Situationen vorteilhaft sein, in denen die Aufmerksamkeit des Nutzers anderweitig gebunden ist, beispielsweise beim Fahrer eines Fahrzeugs oder zum schnellen Bestätigen oder Ablehnen einer Terminanfrage.

Das erfindungsgemäße Fahrzeug umfasst eine erfindungsgemäße Vorrichtung.

Die Erfindung wird nun anhand eines Ausführungsbeispiels mit Bezug zu den Zeichnungen erläutert.
- Figur 1: zeigt ein Ausführungsbeispiel der erfindungsgemäßen Vorrichtung in einem Fahrzeug und
- Figuren 2A bis 2D: zeigen ein Ausführungsbeispiel des erfindungsgemäßen Verfahrens.

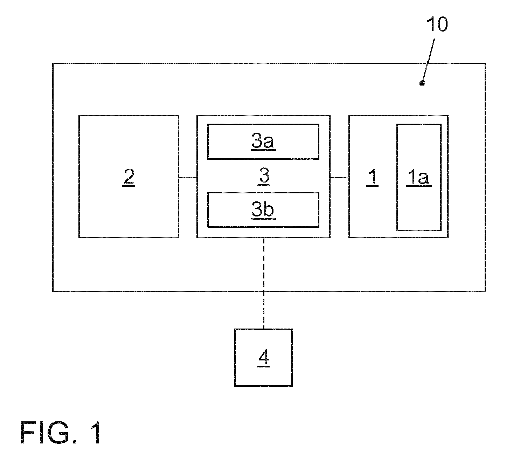

Mit Bezug zu Figur 1 wird ein Ausführungsbeispiel der erfindungsgemäßen Vorrichtung in einem Fahrzeug erläutert.

Ein Fahrzeug 10 umfasst eine Anzeigeeinheit 1 mit einer Anzeigefläche 1a und eine Bedienschnittstelle 2, die mit einer Steuerung 3 gekoppelt sind.

Die Steuerung 3 umfasst eine Terminplanungseinheit 3a. Insbesondere kann die Anzeigefläche 1a eine berührungsempfindliche Oberfläche aufweisen, etwa einen Touchscreen. In diesem Fall kann die Bedienschnittstelle 2 in die Anzeigeeinheit 1 integriert sein und Nutzereingaben können mittels des Touchscreens erfasst werden.

Ferner umfasst die Steuerung 3 einen Empfänger 3b. Über diesen ist ein externes Nutzergerät 4 datentechnisch mit der Steuerung 3 verbunden. Die Verbindung erfolgt im dargestellten Fall durch eine drahtlose Verbindung, etwa Bluetooth, WLAN, Infrarot oder ein Mobilfunknetz.

In einem weiteren Ausführungsbeispiel umfasst die Vorrichtung zudem eine Sprachsteuerung, durch die akustisch erfassbare Meldungen ausgegeben sowie Sprachsteuerungsbefehle erfasst und verarbeitet werden können.

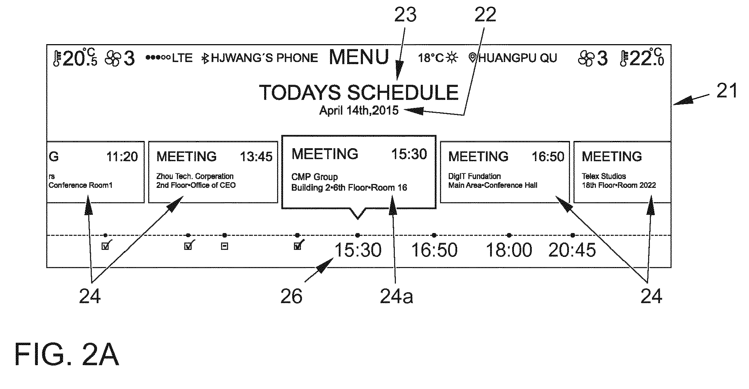

Mit Bezug zu den Figuren 2A bis 2D wird ein Ausführungsbeispiel des erfindungsgemäßen Verfahren erläutert. Die dargestellten Anzeigen wurden anhand der in Figur 1 dargestellten und oben erläuterten erfindungsgemäßen Vorrichtung erzeugt.

Die Steuerung 3 erzeugt mittels der Daten der Terminplanungseinheit 3a zunächst eine Darstellung 21, in der Termine 24 als graphische Objekte dargestellt werden. Diese erste Darstellung 21 ist in Figur 2A gezeigt. Die Termine 24 sind in einem horizontalen Band über die Breite der Anzeigefläche 1a angeordnet, wobei sie chronologisch aufsteigend von links nach rechts sortiert sind. Ferner ist ein aktueller Termin 24a mittig und gegenüber den anderen Terminen 24 leicht vergrößert dargestellt.

Zu den Terminen 24 werden verschiedene Informationen dargestellt, im dargestellten Fall in alphanumerischer Form. Es werden hier der Typ des Termins 24 (etwa "Meeting") sowie der Ort (Gebäude, Raumnummer) und die Uhrzeit des Beginns dargestellt.

Die Darstellung 21 umfasst ferner eine Zeitachse 26, die unterhalb des Bandes mit den Terminen 24 verläuft und an der Markierungen für diejenigen Zeitpunkte angeordnet sind, die den Terminen 24 zugeordnet sind. Links von dem aktuellen Termin 24a sind die bereits erledigten Termine durch Häkchen markiert, für den aktuellen Termin 24a und die folgenden Termine 24 werden die Uhrzeiten angegeben.

Die Darstellung 21 umfasst ferner eine Textmeldung 22 mit einer Titelzeile 23. Zunächst wird hier dargestellt, dass der Terminplan des aktuellen Tages angezeigt wird, und es wird das aktuelle Datum angegeben.

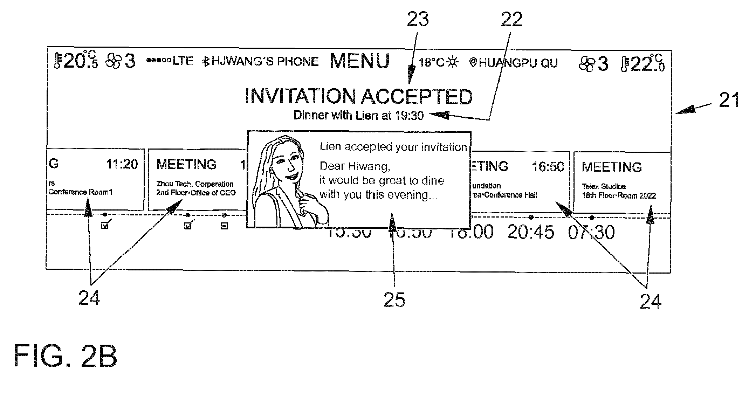

Figur 2B zeigt ein Ausführungsbeispiel für den Fall, dass die Steuerung 3 eine Bestätigung für eine ausstehende Terminanfrage empfängt. Dies erfolgt im vorliegenden Fall über das mobile Nutzergerät 4, das mit dem Internet verbunden ist. In anderen Ausführungsbeispielen kann die Bestätigung auf andere Weise empfangen werden, etwa mittels einer Eingabe durch den Nutzer oder eine direkte Verbindung der Steuerung 3 mit dem Internet.

Die Bestätigung wird mittels einer Popup-Meldung 25 angezeigt, die ein Bild der mit der Terminanfrage verknüpften Person und eine Textmeldung umfasst. Im dargestellten Fall überlagert die Popup-Meldung 25 den mittleren Bereich der graphischen Darstellung 21. Ferner verändern sich die Textmeldung 22 und die Titelzeile 23, sodass diese nun anzeigen, dass die Terminanfrage bestätigt wurde. Ferner umfasst die Terminanfrage, die gerade bestätigt wurde, auch Zeitdaten. Diese werden in der Textmeldung 22 ausgegeben und der Nutzer kann aus der graphischen Darstellung 21 sehen, wann der bestätigte Termin stattfinden wird.

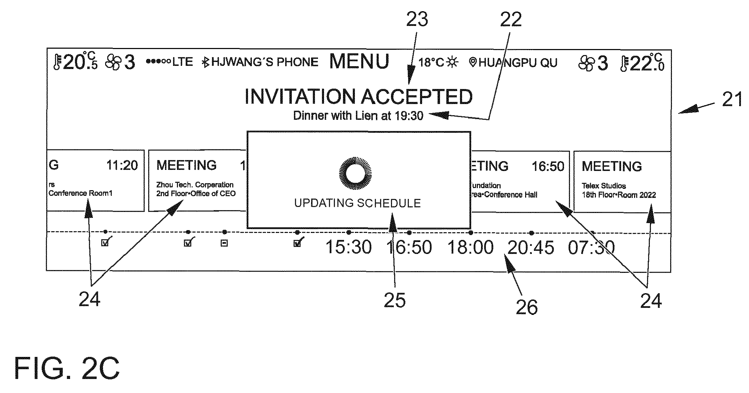

In einem weiteren Schritt, welcher der in Figur 2C dargestellten Anzeige entspricht, wird die Aktualisierung des Terminplans vorbereitet. Dazu wird die Popup-Meldung 25 so verändert, dass der Nutzer erkennen kann, dass eine Aktualisierung vorgenommen wird.

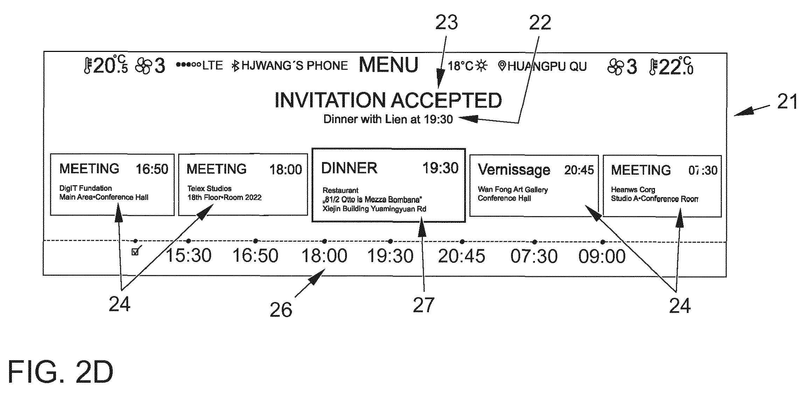

Wie in Figur 2D dargestellt, wird das Band mit den Terminen 24 so verschoben, dass nunmehr ein zukünftiger Zeitpunkt mittig angezeigt wird. Dieser Zeitpunkt stimmt mit dem Beginn eines neuen Termins 27, welcher der bestätigten Terminanfrage entspricht, überein. Die dargestellten Termine 24 werden auseinander geschoben und bilden damit eine Lücke, in die der neue Termin 27 eingefügt wird. Der neue Termin 27 wird nun in der Band der Termine 24 eingefügt.

In einem letzten Schritt wird das Band mit den Terminen 24 wieder so verschoben, dass der Aktuelle Termin 24a mittig angezeigt wird. Da der neue Termin 27 außerhalb des dargestellten Bereichs liegt, entspricht diese Darstellung der in Figur 2A gezeigten.

In einem weiteren Ausführungsbeispiel umfasst die Terminanfrage eine externe Anfrage an den Nutzer. In diesem Fall wird eine entsprechende Meldung als Popup-Meldung 25 angezeigt und der Nutzer wird aufgefordert, die Terminanfrage zu bestätigen oder abzulehnen. Bestätigt der Nutzer den angefragten neuen Termin 27, so wird dieser analog zu dem oben beschriebenen Beispiel in das Band der Termine 24 aufgenommen. Die Bestätigung oder Ablehnung der Terminanfrage kann auf verschiedene Weise erfolgen, etwa durch eine Eingabe mittels der Bedienschnittstelle 2.

### Bezugszeichenliste

- 1: Display, Anzeigeeinheit
- 1a: Anzeigefläche
- 2: Bedienschnittstelle
- 3: Steuerung
- 3a: Terminplanungseinheit
- 3b: Empfänger
- 4: Externes Nutzergerät
- 10: Fahrzeug
- 21: Graphische Darstellung
- 22: Textmeldung
- 23: Titelzeile
- 24: Termine
- 24a: Aktueller Termin
- 25: Pupup-Meldung
- 26: Zeitachse
- 27: Neuer Termin

## Patentansprüche

1. Verfahren zum Verwalten von Terminen (24), bei dem
zeitlich aufeinanderfolgende erste Termine (24) geordnet in einem horizontalen Band auf einem Display (1) ausgegeben werden,
**dadurch gekennzeichnet, dass**
eine Terminanfrage empfangen wird, die einen neuen Termin (27) in dem Intervall der aufeinanderfolgenden ersten Termine (24) enthält,
eine Bestätigung der Terminanfrage empfangen wird,
das horizontale Band und der neue Termin (27) derart relativ zueinander verschoben werden, dass der neue Termin (27) an dem Zeitpunkt des horizontalen Bandes erscheint, an dem der neue Termin (27) eingefügt werden soll,
die ersten Termine (24) vor und hinter diesem Zeitpunkt auseinandergeschoben werden,
der neue Termin (27) zwischen den unmittelbar vor und hinter diesem Zeitpunkt befindlichen ersten Terminen (24) in das horizontale Band eingefügt wird und
das horizontale Band derart verschoben wird, dass der nächste Termin (24a) auf dem Display erscheint.

2. Verfahren nach Anspruch 1,
**dadurch gekennzeichnet, dass**
die Termine (24, 24a, 27) Daten zu einem Anfangszeitpunkt, einem Endzeitpunkt, einer Dauer, einem Namen und/oder einem geographischen Ort umfassen.

3. Verfahren nach einem der vorhergehenden Ansprüche ,
**dadurch gekennzeichnet, dass**
die Termine (24, 24a, 27) als Terminobjekte dargestellt werden, wobei die Terminobjekte zeitlich aufeinanderfolgend in dem horizontalen Band geordnet sind.

4. Verfahren nach einem der vorhergehenden Ansprüche ,
**dadurch gekennzeichnet, dass**
die Terminobjekte alphanumerische Angaben über den Termin (24, 24a, 27) umfassen.

5. Verfahren nach einem der vorhergehenden Ansprüche,
**dadurch gekennzeichnet, dass**
anhand der Terminanfrage ein graphisches Anfrageobjekt (25) erzeugt und angezeigt wird.

6. Verfahren nach Anspruch 5,
**dadurch gekennzeichnet, dass**
die Terminanfrage einen Namen einer Person umfasst und das Anfrageobjekt (25) eine bildhafte Darstellung umfasst, die der Person zugeordnet ist.

7. Verfahren nach einem der vorhergehenden Ansprüche,
**dadurch gekennzeichnet, dass**
ferner anhand der Terminanfrage eine akustisch erfassbare Ausgabe erzeugt und ausgegeben wird.

8. Verfahren nach einem der vorhergehenden Ansprüche,
**dadurch gekennzeichnet, dass**
das horizontale Band ein graphisches Zeitachsenobjekt (26) mit einer horizontalen Längsausdehnung umfasst und die Termine (24, 24a, 27) entlang der Längsausdehnung des Zeitachsenobjekts (26) angeordnet sind.

9. Verfahren nach Anspruch 8,
**dadurch gekennzeichnet, dass**
das graphische Zeitachsenobjekt (26) Markierungen umfasst, die den Terminen (24, 24a, 27) zugeordnete Zeitdaten markieren.

10. Verfahren nach einem der vorhergehenden Ansprüche,
**dadurch gekennzeichnet, dass**
die Nutzerbestätigung durch einen Touchscreen, einen Tastschalter, einen Gestensensor oder einen akustischen Sensor erfasst wird.

11. Verfahren nach einem der vorhergehenden Ansprüche,
**dadurch gekennzeichnet, dass**
die ersten Termine (24, 24a) und/oder die Terminanfrage von einem externen Nutzergerät (4) erfasst werden.

12. Vorrichtung zum Verwalten von Terminen mit
einem Display (1),
einer Bedienschnittstelle (2) und
einer Steuerung (3), die eingerichtet ist, zeitlich aufeinanderfolgende erste Termine (24) geordnet in einem horizontalen Band auf dem Display (1) auszugeben,
**gekennzeichnet durch**
einen Empfänger (3b) und **dadurch**, dass
die Steuerung (3) eingerichtet ist,
über den Empfänger (3b) eine Terminanfrage zu empfangen, die einen neuen Termin (27) in dem Intervall der aufeinanderfolgenden ersten Termine (24, 24a) enthält,
die Terminanfrage auf dem Display (1) auszugeben,
über die Bedienschnittstelle (2) eine Bestätigung der Terminanfrage zu empfangen,
das horizontale Band und den neuen Termin (27) derart relativ zueinander zu verschieben, dass der neue Termin (27) an dem Zeitpunkt des horizontalen Bandes erscheint, an dem der neue Termin (27) eingefügt werden soll,
die ersten Termine (24, 24a) vor und hinter diesem Zeitpunkt auseinanderzuschieben,
den neuen Termin (27) zwischen den unmittelbar vor und hinter diesem Zeitpunkt befindlichen ersten Termin (24, 24a) in das horizontale Band einzufügen und
das horizontale Band derart zu verschieben, dass der nächste Termin (24a) auf dem Display (1) erscheint.

13. Vorrichtung nach Anspruch 12,
**gekennzeichnet durch**
die ersten Termine (24) und/oder die Terminanfrage **durch** den Empfänger (3b) von einem externen Nutzergerät (4) erfassbar sind.

14. Vorrichtung nach Anspruch 12 oder 13,
**dadurch gekennzeichnet, dass**
die Bedienschnittstelle (2) einen Touchscreen, einen Tastschalter, einen Gestensensor und/oder einen akustischen Sensor umfasst.

15. Fahrzeug (1) mit einer Vorrichtung nach einem der Ansprüche 11 bis 13.
